# EUROPEAN PATENT APPLICATION

(11) **EP 4 832 241 A1**
(43) Date of publication of application: **28.10.2026**
(21) Application number: 25172668.3
(22) Date of filing: 25.04.2025
(51) Int. Cl.: H01P 1/38, H01P 1/383, C01G 49/06, H01F 1/03

(54) **NON-RECIPROCAL DEVICE FOR A RADIO WAVE, METHOD OF MANUFACTURE AND USE OF A NON-RECIPROCAL DEVICE FOR A RADIO WAVE**

(71) Applicant: Technische Universität München, in Vertretung des Freistaates Bayern, 80333 München (DE); Bayerische Akademie der Wissenschaften, 80539 München (DE)
(72) Inventor: Holleitner, Alexander, 82110 Germering (DE); Gröbmeyer, Johannes, 85748 Garching (DE); Hübl, Hans-Gregor, 85748 Garching (DE); Althammer, Matthias, 81929 München (DE); Knolle, Johannes, 80803 München (DE); Peng, Rao, 81547 München (DE)
(74) Representative: Lucke, Andreas

(57) **Abstract**

A non-reciprocal device for a radio wave comprises a non-reciprocal element. The non-reciprocal element comprises a material. A crystallographic structure of said material is without inversion symmetry. The non-reciprocal element further comprises electrodes arranged around the non-reciprocal element. The electrodes are electrically coupled to the non-reciprocal element at different positions along the non-reciprocal element. The non-reciprocal element is adapted to, when the radio wave is introduced to the non-reciprocal element via any one of the electrodes, transmit the radio wave via the non-reciprocal element to a neighboring electrode of the electrodes at a first transmittance. The first transmittance is higher than a second transmittance, the second transmittance referring to a transmittance of the radio wave transmitted via the non-reciprocal element to said one of the electrodes when the radio wave is introduced to the non-reciprocal element via the neighboring electrode. Said material is antiferromagnetic.

## Description

### FIELD OF THE DISCLOSURE

The present disclosure relates to a non-reciprocal device for radio wave applications, to a method for forming such a device and to a use of such device. The device comprises a non-reciprocal element comprising a material exhibiting Dzyaloshinskii-Moriya interaction, i.e., a material with spin order and with a crystallographic structure lacking inversion symmetry. A respective non-reciprocal element exhibits spin excitations giving rise to significant non-vanishing off-diagonal elements in the frequency dependent conductance, resulting in non-reciprocal conductance for at least one frequency band in the radio wave frequency band of electromagnetic radiation. According to the disclosure, the non-reciprocal conductance associated with the spin excitations is applied in a non-reciprocal device such as a circulator or an insulator. Preferably, said material exhibits antiferromagnetic order, thus avoiding stray magnetic fields outside of the non-reciprocal element.

### BACKGROUND

A radio wave non-reciprocal device (which is also referred to as a non-reciprocal device for a radio wave in this disclosure) such as a radio wave circulator or a radio wave insulator comprises a non-reciprocal element made from a material with specific magnetic properties, such as a ferrite. The non-reciprocal element is surrounded by electrodes that are electrically coupled to it. When a radio wave is introduced to the non-reciprocal element via one of the electrodes, the radio wave is transmitted non-reciprocally between the respective electrode and a neighboring one of the electrodes. The non-reciprocal transmission refers to a transmission with higher efficiency, or transmittance, respectively, in one direction (forward direction) as compared to the opposite direction (reverse direction).

In conventional non-reciprocal devices, or in conventional non-reciprocal elements, respectively, the non-reciprocal transmission of the radio wave between the electrode and the neighboring electrode is achieved making use of the Faraday effect. For this purpose, a ferrite or another material with ferrimagnetic order is applied in the non-reciprocal element.

### SUMMARY OF THE DISCLOSURE

It is an object of this invention to provide improvements in relation to a radio wave non-reciprocal device, and, in particular, to provide an improved radio wave non-reciprocal device, a method of manufacture and use of the radio wave non-reciprocal device.

According to an aspect of the disclosure, a non-reciprocal device for a radio wave is provided. The non-reciprocal device comprises a non-reciprocal element. The non-reciprocal element comprises a material. A crystallographic structure of said material is without inversion symmetry. The non-reciprocal device further comprises electrodes being arranged around the non-reciprocal element. The electrodes are electrically coupled to the non-reciprocal element at different positions along the non-reciprocal element. The non-reciprocal element is adapted to, when the radio wave is introduced to the non-reciprocal element via any one of the electrodes, transmit the radio wave via the non-reciprocal element to a neighboring electrode of the electrodes at a first transmittance. Said first transmittance is higher than a second transmittance, the second transmittance referring to a transmittance of the radio wave transmitted via the non-reciprocal element to said one of the electrodes when the radio wave is introduced to the non-reciprocal element via the neighboring electrode. Said material is antiferromagnetic.

The material comprised in the non-reciprocal element exhibits antisymmetric exchange (i.e., in the total magnetic exchange interaction between two neighboring magnetic spins), also known as Dzyaloshinskii-Moriya interaction, and also referred to as DM interaction in the context of this disclosure.

The inventors have realized, and have demonstrated using simulations, that the DM interaction gives rise to non-vanishing off-diagonal elements in the frequency dependent conductance, or in the frequency dependent permittivity, respectively, or in the frequency dependent refractive index, respectively, or in the frequency dependent group velocity, respectively. In the context of this disclosure, the respective quantities (frequency dependent conductance, frequency dependent permittivity, frequency dependent refractive index, frequency dependent group velocity) are collectively referred to as dispersive properties. The non-reciprocal properties of the non-reciprocal element arise from the non-vanishing off-diagonal elements in the dispersive properties. For example, the non-vanishing off-diagonal elements in the dispersive properties can be expressed as a non-vanishing transverse conductivity, referring to non-vanishing off-diagonal elements in the frequency dependent conductance.

More specifically, any of the non-vanishing off-diagonal elements in the dispersive properties mentioned in the foregoing paragraph occurs in a frequency range determined by the frequencies (or energies, respectively) of the spin excitations. The frequencies of the spin excitations are in the radio-frequency range of the electromagnetic spectrum (i.e., of the spectrum of electromagnetic radiation), with their precise values being material-dependent.

In the context of this disclosure, the radio-frequency range of the electromagnetic spectrum refers to a frequency range from 3 kHz to 3,000 GHz or to a spectral range from 300 MHz to 3000 GHz or to a spectral range from 300 MHz to 300 GHz or to a spectral range from 1 GHz to 3000 GHz or to a spectral range from 1 GHz to 300 GHz. Accordingly, the term radio wave refers to an electromagnetic wave comprising a frequency component in at least one of the forementioned frequency ranges.

To summarize, since the spin excitations in the presence of the DM interaction give rise to non-vanishing off-diagonal elements in the dispersive properties, and the frequencies of the spin excitations are in the radio-frequency range, the spin excitations cause non-vanishing off-diagonal elements in any of the dispersive properties in at least one frequency band in the radio-frequency range. Said at least one frequency band (e.g., its lower end frequency and its higher end frequency, or its frequency width and central frequency, respectively) is determined by the frequencies of the spin excitations.

The invention makes use of these non-vanishing off-diagonal elements in the dispersive properties. Namely, these properties allow for constructing a compact non-reciprocal device, such as a circulator or insulator, using the material with the non-vanishing off-diagonal elements in its dispersive properties in the non-reciprocal element of the non-reciprocal device. When a radio wave having a frequency in the aforementioned at least one frequency band is transmitted through such a non-reciprocal device, the radio wave is transmitted non-reciprocally between any electrode and a neighboring electrode (i.e., with respect to the forementioned any one of the electrodes) of the non-reciprocal device, i.e., with a higher efficiency in one direction (forward direction) as compared to the opposite direction (reverse direction).

The inventors have found that for suitable materials, surprisingly, the non-vanishing off-diagonal elements resulting from the DM interaction in the dispersive properties (e.g., in the frequency-dependent conductance) exceed 1% relative to the diagonal elements of the respective dispersive property. Specifically, in case of hematite, the transverse conductivity (being an off-diagonal element in the conductance) amounts to around 5% of the longitudinal conductivity (being a diagonal element in the conductance). The inventors have found that this large transverse conductivity gives rise to significant non-reciprocal effects in the material, with an anisotropy in the scattering matrix between the forward transmission S13 and the reverse transmission S31 being as large as 225.

The large off-diagonal elements in the dispersive properties (e.g., in the frequency dependent conductance) being so large allows for the construction of a non-reciprocal device with a size (e.g., lateral dimension, such as width or diameter, of the non-reciprocal element) below 1 cm, or below 1 mm, and typically on the order of 100 µm. The respective non-reciprocal device is much smaller than conventional non-reciprocal devices making use of the Faraday effect and/or of a non-reciprocal element comprising a ferromagnet or a ferrimagnet.

The smaller size of the non-reciprocal element according to this disclosure is a significant improvement towards a co-integration of a non-reciprocal element in an integrated circuit, for example in an integrated circuit comprising a superconductor device such as a qubit or a superconducting quantum interference device (SQUID). Conventional non-reciprocal devices have sizes of 1 cm and more, undesirably large for such a co-integration.

When a non-reciprocal element according to this disclosure, having a significantly smaller size than conventional non-reciprocal elements, is co-integrated (e.g., arranged or formed on the same substrate) with another electrical component, the smaller size improves the packing density of the co-integration, which is generally desirable.

In particular, when a non-reciprocal element according to this disclosure, having a significantly smaller size than conventional non-reciprocal elements, is co-integrated (e.g., arranged or formed on the same substrate) with a superconductor device such as a qubit or a SQUID, the smaller size reduces the amount of material that needs to be cooled when the superconductor device is cooled to its operating temperature (typically, below 4 K), as well as the amount of material that needs to be maintained at this operating temperature. These relaxed cooling requirements reduce the energy consumption of an integrated circuit comprising the superconductor device and the non-reciprocal element according to this disclosure, or improve its energy efficiency, respectively.

As a further advantage, the non-reciprocal element according to this disclosure can be formed using thin-film (< 1 µm) deposition techniques. It can thus easily be co-integrated (e.g., formed on the same substrate) with a superconductor device. Moreover, when the non-reciprocal element is formed as a thin film, its volume is further reduced, with the advantages given above in the context of the smaller size of the non-reciprocal element.

The reduced thickness of the non-reciprocal element as compared to conventional non-reciprocal elements reduces the amount of material used to form the non-reciprocal device according to this disclosure, resulting in a cost reduction.

In embodiments, wherein the material comprised in the non-reciprocal element is antiferromagnetic, the non-reciprocal device according to this disclosure further minimizes or avoids magnetic fields outside of the non-reciprocal element and originating from the non-reciprocal element. This is an advantage over conventional non-reciprocal devices applying a ferromagnet or a ferrimagnet in the non-reciprocal element. In said conventional devices, the ferromagnet or ferrimagnet acts as a source of a magnetic field outside of the non-reciprocal element and originating from the non-reciprocal element. In a circuit combining the non-reciprocal element with a superconductor device, the magnetic field originating from the conventional non-reciprocal element would be detrimental to the operation of the superconductor device, if it would reach the superconductor device. Thus, if a superconductor device and a conventional non-reciprocal element are to be coupled to each other in the same circuit, a distance between the non-reciprocal element and the superconductor device is applied to avoid that the magnetic field originating from the non-reciprocal element reaches the superconductor device. The minimized magnetic field of the non-reciprocal element according to this invention minimizes any undesirable effect onto the superconductor device, allows for a higher package density of the non-reciprocal element and the superconductor device (e.g., without a need for a distance between the non-reciprocal element and the superconductor device associated with a magnetic field), and is thus particularly beneficial in a circuit combining a non-reciprocal element and a superconductor device.

Circuits (e.g., an electronic circuit and/or an integrated circuit) combining a non-reciprocal element and a superconductor device include: a circuit for quantum computing, a circuit for quantum sensing, a circuit for quantum transduction, a circuit for quantum-based signal conversion, and a circuit for quantum communication.

The non-reciprocal element, or the non-reciprocal device, respectively, according to this disclosure, can further be beneficially applied in a circuit for telecommunication and a circuit of a radar system.

Said material comprised in the non-reciprocal element may be one of the following: an orthoferrite, in particular an orthoferrite having an empirical formula XFeO3, wherein X is a rare-earth element; a manganite, in particular a manganite having an empirical formula XMnO3, wherein X is a rare-earth element; and hematite, in particular, wherein the hematite has an empirical formula Fe2O3 and/or the hematite is α-hematite.

The non-reciprocal element may consist of said material or may be made from said material.

Respective materials exhibit a significant DM interaction, as well as dominantly antiferromagnetic exchange coupling. Significant non-vanishing off-diagonal elements in the dispersive properties are therefore expected for the respective materials, resulting in non-reciprocal properties in at least one corresponding frequency band.

Orthoferrites further provide the advantage of high magnetic ordering temperatures, often above room temperature, making them particularly suitable for room temperature (e.g., at 295 K or above) applications.

Manganites offer the advantage of tunable magnetic properties through the choice of rare-earth elements, allowing for customization of the non-reciprocal device's operational characteristics. Manganites are particularly relevant for cryogenic applications due to their magnetic ordering temperatures typically being below room temperature.

Hematite provides the advantage that methods for its thin-film deposition on substrates like Al₂O3 are developed.

Using simulations, the inventors have demonstrated that hematite exhibits a significant transverse conductance (e.g., relative to its longitudinal conductance). The inventors have further conducted simulations on devices each comprising a non-reciprocal element made from hematite, demonstrating the functioning of the devices, in particular for devices with small sizes of the non-reciprocal element.

The material comprised in the non-reciprocal element may exhibit a Dzyaloshinskii-Moriya interaction.

Said different positions may be arranged around the non-reciprocal element in a plane.

The electrodes may be arranged around the non-reciprocal element in a plane.

A respective planar arrangement can help in maintaining a uniform and controlled interaction between the electrodes and the non-reciprocal element. Arranging the electrodes in a plane around the non-reciprocal element ensures a uniform and symmetrical distribution of the electrodes, which can facilitate consistent and predictable interaction with the non-reciprocal element. Also, a planar arrangement of the electrodes simplifies the design and fabrication process.

According to some embodiments, the material comprised in the non-reciprocal element is α-hematite arranged such that a [0001] crystallographic orientation of the α-hematite is parallel to a surface normal of the plane.

Growth conditions for respective hematite have successfully been developed.

A respective growth direction ensures best possible use of the transverse conductance (i.e., the off-diagonal elements in the frequency dependent conductance), in particular, when the electrodes and/or the current flow associated with the non-reciprocal transmission are in the plane.

Said different positions may be arranged equidistantly and/or symmetrically along the non-reciprocal element.

A respective arrangement of the electrodes can lead to a more predictable and stable performance of the non-reciprocal device. It improves the device's performance by ensuring that the signal paths are equal in length and impedance, which can minimize signal loss.

According to some embodiments, the electrodes and/or the different positions are arranged around the non-reciprocal element in an arrangement exhibiting a mirror symmetry.

The electrodes and/or the different positions may be arranged around the non-reciprocal element in an arrangement exhibiting an n-fold rotational symmetry, in particular, wherein n = 3 or 4, in particular, wherein n = 3.

The different positions may be arranged around the non-reciprocal element in an arrangement exhibiting an n-fold rotational symmetry about an axis, said axis being perpendicular to the plane, in particular, wherein n = 3 or 4, in particular, wherein n = 3.

The electrodes may be arranged around the non-reciprocal element in an arrangement exhibiting an n-fold rotational symmetry about an axis, said axis being perpendicular to the plane; in particular, wherein n = 3 or 4, in particular, wherein n = 3
According to some embodiments, along each and any direction in said plane, an extension of the non-reciprocal element is no more than 1 mm.

According to some embodiments, along each and any direction, an extension of the non-reciprocal element is no more than 1 mm.

The non-reciprocal element may have a shape exhibiting the n-fold rotational symmetry, in particular, wherein n = 3 or 4, in particular, wherein n = 3 and/or about an axis being perpendicular to the plane.

According to some embodiments, the non-reciprocal element has a thickness smaller than 0.5 µm or smaller than 0.2 µm. In particular, the non-reciprocal element may have a thickness smaller than 0.5 µm or smaller than 0.2 µm along a direction perpendicular to the plane.

The non-reciprocal element may be arranged on a substrate. In particular, in embodiments, wherein said material is α-hematite, the substrate may comprise sapphire, in particular at a surface of the substrate facing the non-reciprocal element, or the substrate may be composed of sapphire. In respective embodiments, the non-reciprocal element may have a thickness of no more than 0.2 µm or of no more than 0.1 µm.

The electrodes may be electrically coupled to the non-reciprocal element capacitively or through physical and electrical contacts, preferably capacitively.

The radio wave may refer to an electromagnetic wave comprising a frequency component in a spectral range from 3 kHz to 3,000 GHz or in a spectral range from 300 MHz to 3,000 GHz or in a spectral range from 300 MHz to 300 GHz or in a spectral range from 1 GHz to 3,000 GHz or in a spectral range from 1 GHz to 300 GHz.

Said material comprised in the non-reciprocal element may be antiferromagnetic at room temperature or at 295 K. Alternatively, or in addition, said material comprised in the non-reciprocal element may be antiferromagnetic at a cryogenic temperature or at a temperature smaller than 4K.

The first transmittance may be higher than the second transmittance at least by a factor of 2 or at least by a factor of 10.

According to some embodiments, the non-reciprocal device is a circulator. In respective embodiments, the electrodes are at least three electrodes. In respective embodiments, the at least three electrodes comprise, for any one of the at least three electrodes, a first neighboring electrode, the first neighboring electrode neighboring said one of the at least three electrodes along a first direction, and a second neighboring electrode, the second neighboring electrode neighboring said one of the at least three electrodes along a second direction opposite to the first direction. In respective embodiments, the non-reciprocal element is adapted to, when the radio wave is introduced to the non-reciprocal element via any one of the at least three electrodes, transmit the radio wave to the first neighboring electrode at a higher transmittance than to the second neighboring electrode,
Optionally, in embodiments wherein the non-reciprocal element is a circulator, the first neighboring electrode may provide said neighboring electrode; and/or the higher transmittance may be higher at least by a factor of 2 or at least by a factor of 10.

A further aspect relates to an integrated circuit. The integrated circuit comprises an integrated circuit substrate. The integrated circuit comprises a non-reciprocal element according to any of the embodiments described above, and a superconductor device, for example a superconducting qubit or a superconducting squid. The non-reciprocal element and the superconductor device are arranged above or on the integrated circuit substrate and are supported by the integrated circuit substrate. The non-reciprocal element is electrically coupled to the superconductor device.

A further aspect relates to a circulator for a radio wave. The circulator comprises a non-reciprocal element and at least three electrodes. The non-reciprocal element comprises a material, a crystal structure of said material being without inversion symmetry. The at least three electrodes are arranged around the non-reciprocal element and electrically coupled to the non-reciprocal element at different positions along the non-reciprocal element. The at least three electrodes comprise, for any one of the at least three electrodes, a first neighboring electrode neighboring said any one of the at least three electrodes along a first direction, and a second neighboring electrode neighboring said any one of the at least three electrodes along a second direction opposite to the first direction. The non-reciprocal element is adapted to, when the radio wave is introduced to the non-reciprocal element via any one of the at least three electrodes, transmit the radio wave to the first neighboring electrode at a higher transmittance than to the second neighboring electrode. Said material is antiferromagnetic.

A further aspect relates to a non-reciprocal device for a radio wave. The non-reciprocal device comprises a non-reciprocal element and electrodes. The non-reciprocal element comprises a material, a crystallographic structure of said material being without inversion symmetry. The electrodes are arranged around the non-reciprocal element and electrically coupled to the non-reciprocal element at different positions along the non-reciprocal element. The non-reciprocal element is adapted to, when the radio wave is introduced to the non-reciprocal element via any one of the electrodes, transmit the radio wave via the non-reciprocal element to a neighboring electrode of the electrodes at a first transmittance, wherein said first transmittance is higher than a second transmittance, said second transmittance referring to a transmittance of the radio wave transmitted via the non-reciprocal element to said one of the electrodes when the radio wave is introduced to the non-reciprocal element via the neighboring electrode. Said material exhibits a Dzyaloshinskii-Moriya interaction.

A further aspect relates to a circulator for a radio wave. The circulator comprises a non-reciprocal element and at least three electrodes. The non-reciprocal element comprises a material, a crystal structure of said material being without inversion symmetry. The at least three electrodes are arranged around the non-reciprocal element and electrically coupled to the non-reciprocal element at different positions along the non-reciprocal element. The at least three electrodes comprise, for any one of the at least three electrodes, a first neighboring electrode neighboring said any one of the at least three electrodes along a first direction, and a second neighboring electrode neighboring said any one of the at least three electrodes along a second direction opposite to the first direction. The non-reciprocal element is adapted to, when the radio wave is introduced to the non-reciprocal element via any one of the at least three electrodes, transmit the radio wave to the first neighboring electrode at a higher transmittance than to the second neighboring electrode. Said material exhibits a Dzyaloshinskii-Moriya interaction.

The non-reciprocal device may be an insulator or a circulator.

A further aspect of the invention provides a method for forming a non-reciprocal device for a radio wave. The method comprises selecting a material for a non-reciprocal element. A crystallographic structure of said material is without inversion symmetry, and said material exhibits a Dzyaloshinskii-Moriya interaction. The method further comprises providing the non-reciprocal element comprising said material. The method also comprises providing electrodes, such that the electrodes are arranged around the non-reciprocal element and the electrodes are electrically coupled to the non-reciprocal element at different positions along the non-reciprocal element. The non-reciprocal element is adapted to, when the radio wave is introduced to the non-reciprocal element via any one of the electrodes, transmit the radio wave via the non-reciprocal element to a neighboring electrode of the electrodes at a first transmittance. Said first transmittance is higher than a second transmittance. Said second transmittance refers to a transmittance of the radio wave transmitted via the non-reciprocal element to said one of the electrodes when the radio wave is introduced to the non-reciprocal element via the neighboring electrode.

Selecting a material with a crystallographic structure without inversion symmetry and exhibiting a Dzyaloshinskii-Moriya interaction provides the advantages described above with respect to the corresponding non-reciprocal element and/or in the context of the corresponding non-reciprocal device.

Exemplary materials having a crystallographic structure without inversion symmetry and exhibiting a Dzyaloshinskii-Moriya interaction include the materials described above (e.g., orthoferrites, manganite, and hematite), and further include 2D magnetic materials such as CrI3 or CrBr3, with an imprinted breaking of inversion symmetry (e.g., with Pt/It/Ta or by thin-film growth conditions) and further also include multiferroics, such as any of the multiferroics mentioned in Tokura, et al. Reports on Progress in Physics 77.7, 076501 (2014), and further include multilayer structures comprising at least one ferromagnetic layer and at least one non-ferromagnetic layer (e.g., at least one metallic, non-ferromagnetic layer) arranged above one another, such as the Co/Pt multilayer structure described in H. Yang et al., "Anatomy of Dzyaloshinskii-Moriya Interaction at Co=Pt Interfaces," Physical Review Letters 115, 267210 (2015). Tokura, et al. Reports on Progress in Physics 77.7, 076501 (2014) and Yang et al., Physical Review Letters 115, 267210 (2015) are incorporated herein in their entirety by reference.

According to some embodiments, the Dzyaloshinskii-Moriya interaction and/or the crystallographic structure without inversion symmetry may be associated with a surface or an interface (e.g. to another material) of the material. However, preferably, the Dzyaloshinskii-Moriya interaction and/or the crystallographic structure without inversion symmetry may be associated with bulk of the material, or with a bulk material, respectively. In other words, the crystallographic structure without inversion symmetry may be a bulk crystallographic structure without inversion symmetry. Materials with a broken inversion symmetry in the bulk beneficially provide a Dzyaloshinskii-Moriya interaction in their bulk, improving the scalability of the device (e.g. by selection of a suitable amount or thickness of the bulk material) and, according to some embodiments (e.g., with a sufficient amount/thickness of bulk material), providing a larger Dzyaloshinskii-Moriya interaction, which can be beneficial for establishing a compact non-reciprocal device.

Providing the non-reciprocal element may comprise forming a layer of said material and structuring the layer of said material into a shape of the non-reciprocal element, in particular, wherein the formed layer of said material has a thickness smaller than 0.5 µm or smaller than 0.2 µm or smaller than 0.1 µm.

The layer of said material may be formed over or on a substrate. In particular, said material may be α-hematite and the substrate may comprise or may be composed of sapphire.

The selected material may be antiferromagnetic.

A further aspect relates to a method for forming a non-reciprocal device for a radio wave. The method comprises selecting a material for a non-reciprocal element, wherein a crystallographic structure of said material is without inversion symmetry and said material is antiferromagnetic. The method further comprises providing the non-reciprocal element comprising said material; and providing electrodes, such that the electrodes are arranged around the non-reciprocal element and electrically coupled to the non-reciprocal element at different positions along the non-reciprocal element. The non-reciprocal element is adapted to, when the radio wave is introduced to the non-reciprocal element via any one of the electrodes, transmit the radio wave via the non-reciprocal element to a neighboring electrode of the electrodes at a first transmittance, wherein said first transmittance is higher than a second transmittance, said second transmittance referring to a transmittance of the radio wave transmitted via the non-reciprocal element to said one of the electrodes when the radio wave is introduced to the non-reciprocal element via the neighboring electrode.

A further aspect of the invention relates to a use of the non-reciprocal device according to any of the implementations, as a non-reciprocal device.

Said use may comprise transmitting the radio wave via the non-reciprocal element to the neighboring electrode of the electrodes at the first transmittance, wherein said first transmittance is higher than the second transmittance.

In particular, the non-reciprocal device may be used as a circulator or as an insulator, preferably as a circulator. In respective embodiments, the circulator may exhibit one or all the characteristics of a circulator as described above in the context of the non-reciprocal device.

The use as a circulator may comprise introducing the radio wave to the non-reciprocal element via any one of the at least three electrodes, and transmitting the radio wave to the first neighboring electrode at the higher transmittance than to the second neighboring electrode.

### LIST OF FIGURES

In the following, a detailed description of the present disclosure and examples thereof are given with reference to the figures, wherein
Fig. 1 shows a non-reciprocal device according to an embodiment;
Fig. 2 illustrates an excitation spectrum of a material comprised in a non-reciprocal element of a non-reciprocal device according to an embodiment;
Fig. 3a and Fig. 3b illustrate the frequency dependent conductivity of the material of Fig. 2;
Fig. 4a and Fig. 4b illustrate a non-reciprocal device according to another embodiment;
Fig. 5 illustrates a circuit diagram comprising a non-reciprocal device, in particular for simulations of the non-reciprocal device;
Fig. 6a, Fig. 6b, Fig. 7a, and Fig. 7b illustrate the ratio of the first transmittance (i.e., in the forward direction) over the second transmittance (i.e., in the reverse direction) as obtained from simulations of the circuit diagram of Fig. 5, wherein Fig. 6a und 7a depict said ratio on a linear scale, and Fig. 6b und 7b depict said ratio in dB;
Fig. 8 illustrates a method for forming a non-reciprocal device according to an embodiment; and
Fig. 9a to Fig. 9l illustrate a method for forming a non-reciprocal device according to another embodiment.

### DESCRIPTION OF EXAMPLES

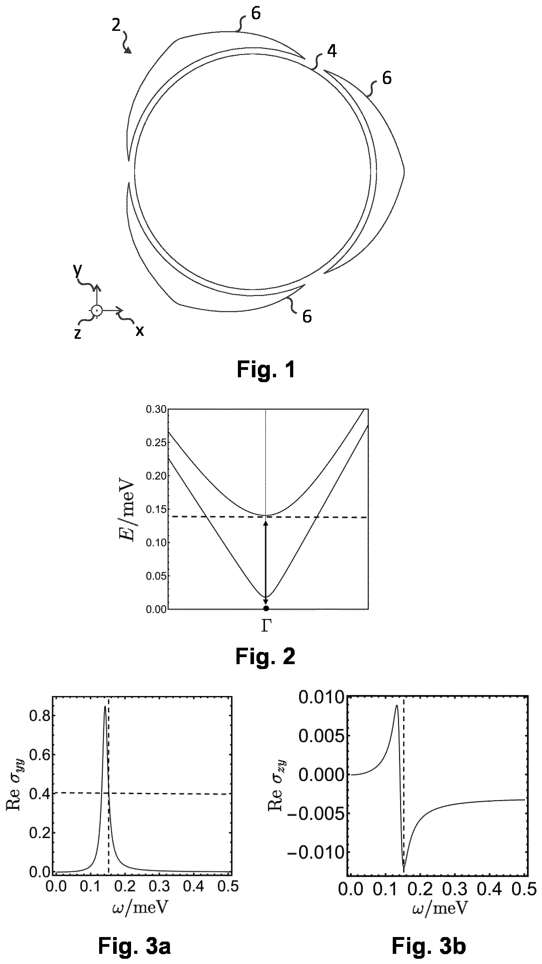

Fig. 1 illustrates a non-reciprocal device 2 for a radio wave. The device 2 comprises a non-reciprocal element 4 and electrodes 6 arranged around the non-reciprocal element 4.

For reference, the figure also indicates a coordinate system with axes x, y, and z. In the context of this disclosure, the z direction is also referred to as the vertical direction. The x-y-plane is also referred to as a horizontal plane or a lateral plane or simply as the plane. Notably, this terminology and terms relating thereto, such as "above" or "below", shall indicate the positions and orientations of the elements of the non-reciprocal device 2 relative to each other, as also indicated in the figures. It is not meant to imply any orientation relative to an external coordinate system, such as an external coordinate system defined by the gravitational field of the earth.

The non-reciprocal element 4 is formed from a material with a crystallographic structure lacking inversion symmetry and exhibiting spin order. This ensures that the material of the non-reciprocal element 4 exhibits a non-vanishing DM interaction. This non-vanishing DM interaction forms the basis for the operation of the non-reciprocal element 4 of this disclosure, or of the non-reciprocal device 2 of this disclosure, respectively, as will be explained in detail below in the context of Fig. 2 to Fig. 3b.

In the depicted example, the material of the non-reciprocal element 4 is hematite. Said material has the empirical formula Fe2O3. More specifically, in the exemplary embodiment, the material of the non-reciprocal element 4 is α-hematite.

As is known from the prior art, hematite can be deposited in the form of crystallographically orientated thin films on sapphire. M. Scheufele et al., APL Matter. 11, 091115 (2023) have demonstrated the deposition of a hematite thin film (up to 100 nm thickness) on sapphire, resulting in the [0001] crystallographic orientation of the hematite being orientated along the surface normal of the sapphire. M. Scheufele et al., APL Matter. 11, 091115 (2023) is incorporated herein in its entirety by reference.

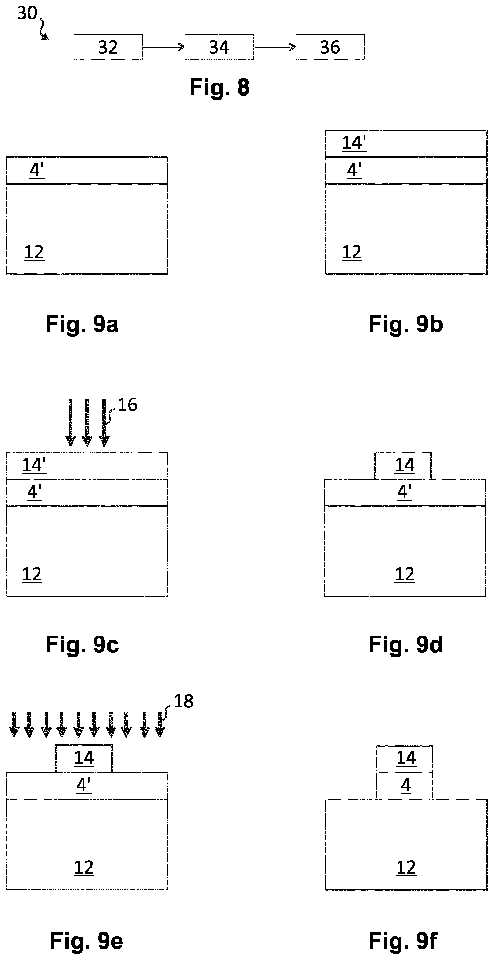

Moreover, structuring techniques suitable for the structuring of the hematite thin film into the shape of the non-reciprocal element 4 are developed. Respective structuring techniques will be described in detail in the context of Fig. 9a to Fig. 9l.

Hematite has the further advantage of being antiferromagnetic. Hence, the non-reciprocal element 4 according to the depicted embodiment, as it is antiferromagnetic, does not act as a source of magnetic fields outside of the non-reciprocal element 4. This is particularly beneficial when the non-reciprocal element 4, or the non-reciprocal device 2, respectively, is to be used in the vicinity of a superconductor device (not shown). The absence of a magnetic field originating from the non-reciprocal element 4 allows for a higher packing density of the non-reciprocal device 2 and the superconductor device.

According to alternative embodiments (not shown), the material of the non-reciprocal element 4 is an orthoferrite, a manganite, a 2D magnetic material such as CrI3 or CrBr3 with an imprinted breaking of inversion symmetry (e.g., with Pt/It/Ta or by thin-film growth conditions), or a multiferroic, such as any of the multiferroics mentioned in Tokura, et al. Reports on Progress in Physics 77.7, 076501 (2014). Amongst those materials, antiferromagnetic materials such as orthoferrite, manganite, and hematite are particularly beneficial for the reasons laid out above.

In the depicted embodiment, the non-reciprocal element 4 has, in the lateral x-y-plane, a circular structure. According to alternative embodiments (not shown), the non-reciprocal element 4 has, in the lateral x-y-plane, a structure with a threefold rotational symmetry (i.e., to implement a three-terminal circulator) or with a fourfold rotational symmetry (i.e., to implement a four-terminal circulator), namely, around the vertical z axis.

In the depicted embodiment, the electrodes 6 are coupled capacitively to the non-reciprocal element 4. In other words, a non-zero distance exists between any of the electrodes 6 and the non-reciprocal element 4. In alternative embodiments (not shown) the electrodes 6 are coupled to the non-reciprocal element 4 through direct electrical, or physical, respectively, contacts. However, the depicted capacitive coupling is preferred.

In the context of this disclosure, the term "electrical coupling" or "electrically coupled" shall include both the capacitive coupling and the coupling through a direct electrical and/or physical contact, such as an ohmic coupling.

In the depicted embodiment, three electrodes 6 are present. Respective embodiments implement a three-terminal circulator.

According to alternative embodiments (not shown), one of the electrodes 6 is terminated with a load resistor to implement a non-reciprocal device 2 in the form of an insulator 2.

According to alternative embodiments (not shown), the electrodes 6 are four electrodes 6. Respective embodiments implement a non-reciprocal device 2 in the form of a four-terminal circulator 2.

The electrodes 6 are electrically conductive. They comprise or are composed of any materials suitable for this purpose, such as a metal. In some embodiments, the electrodes 6 are adapted to exhibit superconductivity at a cryogenic temperature. In respective embodiments, the electrodes 6 are, for example, made from aluminum or niobium. Respective embodiments are beneficial when the non-reciprocal device 2 is to be cointegrated with a superconductor device.

In the depicted embodiment, the electrodes 6, or their electrical contacts to the non-reciprocal element 4, respectively, are arranged symmetrically around the non-reciprocal element 4.

More specifically, the electrodes 6 are arranged around the non-reciprocal element 4 with a mirror symmetry about a mirror plane, namely the x-z-plane, perpendicular to the horizontal x-y-plane.

Also, the electrodes 6 are arranged with a threefold rotational symmetry about an axis, namely the vertical z axis, perpendicular to the horizontal x-y-plane. In alternative embodiments (not shown) with a larger number n of electrodes 6, the respective rotational symmetry is an n-fold rotational symmetry.

The symmetrical arrangement of the electrodes 6, or of their electrical contacts to the non-reciprocal element 4, ensures a balanced and symmetrical configuration for the device 2. The arrangement helps in achieving optimal signal transmission and isolation.

In the depicted embodiment, the non-reciprocal element 4 has a thickness in a range from 3 nm to 100 nm. In the depicted embodiment using α-hematite as the material of the non-reciprocal element 4, respective thicknesses are beneficial, since the deposition of highly ordered films of α-hematite has been demonstrated in M. Scheufele et al., APL Matter. 11, 091115 (2023). Alternative thicknesses are possible, for example, when a material different from α-hematite is used in the non-reciprocal element 4. Generally, it is preferred that the non-reciprocal element 4 is deposited as a thin-film. In other words, a thickness of the non-reciprocal element 4 along the vertical z direction of no more than 10 µm or no more than 1 µm is preferred.

In the depicted embodiment, the non-reciprocal element 4 has a cylindrical shape with a diameter of 100 µm. However, as discussed above, alternative shapes are possible. A width (i.e., maximum extension in the x-y-plane) of the non-reciprocal element 4 of no more than 1 mm is generally preferable, since it favorably supports the co-integration of the non-reciprocal device 2 in an integrated circuit. The non-reciprocal device 2 according to this disclosure, in contrast to conventional non-reciprocal devices, allows for a respective miniaturization.

Typically, a distance in a range from 10 nm to 1 mm, or in a range from 10 nm to 0.1 mm exists between the electrodes 6 and the non-reciprocal element 4 to facilitate the capacitive coupling.

A height (i.e., an extension along the z direction) of the electrodes 6 is selected for adjusting a capacitance between the electrodes 6 and the non-reciprocal element 4. For this purpose, the electrodes 6 are preferably formed with heights in a range from 10 nm to 5 mm.

Fig. 2 illustrates an excitation spectrum of spin excitations in a material comprised in a non-reciprocal element 4 of the non-reciprocal device 2 according to an embodiment, as obtained from simulations.

More specifically, the simulations have been performed for α-hematite as an example material comprised in a non-reciprocal element 4.

The simulations have been performed in the following manner: The starting point for the simulations is the microscopic Hamiltonian described in Dannegger et al. Phys. Rev. B 107 (2023). For a given set of parameters, energy is minimized using a Monte Carlo algorithm, to find the non-collinear classical ground state. Subsequently, the method of the Hollstein-Prima-koff transformation is used to calculate spin waves. The entire excitation spectrum is thus obtained in harmonic approximation, as well as the corresponding wave functions. In order to calculate dispersive properties, a polarization operator is constructed from local multi-spin terms. Symmetry properties of the material are used in this step.

In Fig. 2, the horizontal axis depicts a direction in k-space. Γ denotes the center of the Brillouin zone. The vertical axis depicts a frequency axis, or an energy axis, respectively. Notably, energy E and frequency f are related via Planck's constant h, as E = h x f.

The lower line in Fig. 2 depicts a ground state, or a ground-state energy, respectively, of the spin system of the α-hematite, which acts as the example material comprised in the non-reciprocal element 4. The upper line in Fig. 2 depicts an excited state, or an excited state energy, respectively, of said spin system. The arrow depicts a transition between the ground state and the excited state, as, e.g., excited by a radio wave. Said transition is approximately vertical in Fig. 2. Although only a transition at the center of the Brillouin zone is shown in Fig. 2, further transitions are possible throughout the Brillouin zone.

As the simulation results of Fig. 2 demonstrate, the energies, or frequencies, respectively, of the transitions associated with the spin excitations are in the radio wave frequency band of electromagnetic radiation.

The transitions thus give rise to significant structures in, or modifications to, respectively, the dispersive properties of the material in the radio wave frequency band of electromagnetic radiation.

More specifically, any of said transitions gives rise to a structure in, or a modification to, respectively, the dispersive properties of the material in a corresponding (i.e., corresponding to the transition) frequency band in the radio wave frequency band of electromagnetic radiation.

Fig. 3a and Fig. 3b depict the frequency dependent conductance of α-hematite as the example material comprised in the non-reciprocal element 4, as obtained from the simulation described above in the context of Fig. 2.

Fig. 3a depicts a diagonal term σ_{yy} of a matrix representing the frequency dependent conductance. Fig. 3b depicts an off-diagonal term σ_{zy} of the matrix representing the frequency dependent conductance.

As can be seen from Fig. 3a and Fig. 3b, the transitions give rise to structures in, or modifications to, respectively the frequency dependent conductance σ_{yy}, σ_{zy} in a frequency band from around 0.04 meV to around 0.4 meV, i.e., in the radio wave frequency band of electromagnetic radiation.

Notably, respective structures, or modifications, occur not only in the diagonal term σ_{yy}, but also in the off-diagonal term σ_{zy} of the matrix representing the frequency dependent conductance.

For the exemplary material of the non-reciprocal element 4, α-hematite, the ratio of the off-diagonal term σ_{zy} over the diagonal term σ_{yy} amounts to 1% and more for at least one and some frequencies in the frequency band from around 0.04 meV to around 0.4 meV. For at least one and some frequencies in the frequency band from around 0.04 meV to around 0.4 meV said ratio amounts to around 5% in the depicted example. More specifically, the aforementioned ratios include a ratio at a center frequency of the transition.

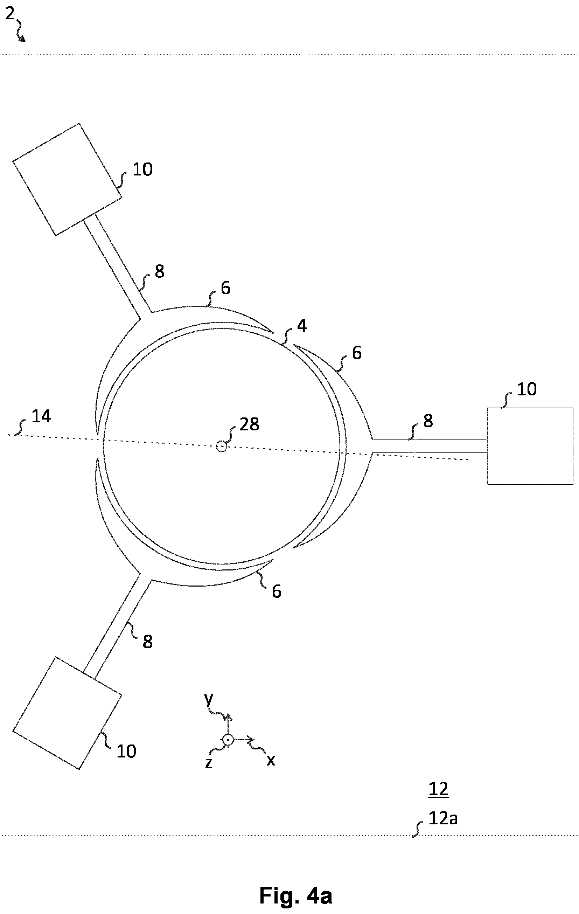

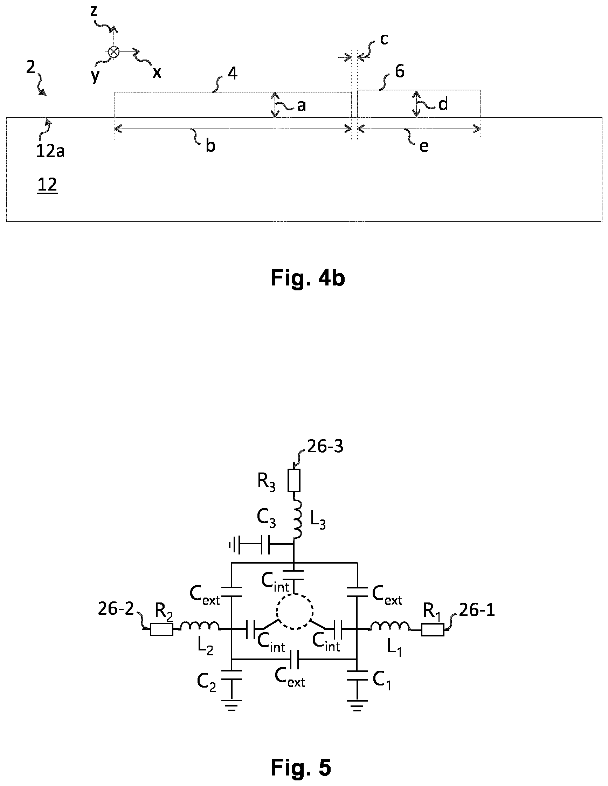

Fig. 4a and Fig. 4b illustrate a non-reciprocal device 2 according to another embodiment. Fig. 4a shows a top view, i.e., a view along the z direction. Fig. 4b gives a cross-section in a vertical plane 14. Said vertical plane 14 is indicated in Fig. 4a.

The non-reciprocal device 2 of Fig. 4a and Fig. 4b is similar to the non-reciprocal device 2 of Fig. 1. However, the non-reciprocal device 2 of Fig. 4a and Fig. 4b is formed with a number of modifications, in particular, regarding a substrate 12 on the one hand, and referring to conductive leads 8, on the other hand. According to different embodiments (not shown), the non-reciprocal device 2 is formed with only one or any combination of said modifications, for example, only with the modifications regarding the substrate 12, or only with the modifications referring to the conductive leads 8. In other words, modifications of the non-reciprocal device 2 of Fig. 4a and Fig. 4b are possible as described above in the context of Fig. 1, e.g., regarding modifications to the shape and/or arrangement of the non-reciprocal element 4 and/or of the electrodes 6.

The non-reciprocal device 2 according to the embodiment depicted in Fig. 4a and Fig. 4b comprises conductive (i.e., electrically conductive) leads 8 in direct electrical and/or physical contact with the electrodes 6.

The conductive leads 8 extent away from the electrodes 6, or from the non-reciprocal element 4, respectively.

The conductive leads 8 serve as pathways for the radio waves to be conducted to the non-reciprocal element 4.

The non-reciprocal device 2 according to the embodiment depicted in Fig. 4a and Fig. 4b comprises ports 10.

The ports 10 are constructed from an electrically conductive material. They are designed to minimize signal loss and interference.

The ports 10 are in direct electrical and/or physical contact with the conductive leads 8.

The ports 10 are designed to facilitate the introduction and extraction of radio waves to and from the non-reciprocal device 2.

Each of the conductive leads 8 ensures that the radio waves are efficiently directed from or to an associated port 10, maintaining the non-reciprocal nature of the device 2.

The non-reciprocal device 2 according to the embodiment depicted in Fig. 4a and Fig. 4b comprises a substrate 12.

The substrate 12 provides a stable platform for the non-reciprocal device 2, improving mechanical support and thermal management.

Preferably, the substrate 12 is made from a material adapted to support thin-film growth of the material of the non-reciprocal element 4 on a surface 12a of the substrate 12. Specifically, for the depicted embodiment using α-hematite as the material comprised in the non-reciprocal element 4, sapphire has been demonstrated to provide a suitable material for this purpose. For details, reference is made to M. Scheufele et al., APL Matter. 11, 091115 (2023).

Generally, a material comprising a crystalline material is beneficial, as it supports thin-film growth of the material of the non-reciprocal element 4 on the surface 12a of the substrate 12 in a crystallographically orientated manner. In other words, the substrate 12 preferably comprises a crystalline material (such as a single-crystal material) at least at the surface 12a of the substrate 12.

Sapphire further has the advantages to provide excellent thermal conductivity and electrical insulation.

According to alternative embodiments (not shown), the substrate 12 comprises (e.g., at least at its surface 12a) other materials that provide similar support and compatibility with the non-reciprocal element 4. Possible materials include ceramics or other crystalline substrates that support thin-film growth of the material of the non-reciprocal element 4.

Fig. 5 illustrates a schematic circuit diagram of a non-reciprocal device 2 in the exemplary form of a circulator comprising inductors L1, L2, L3, capacitors C1, C2, C3, resistors R1, R2, R3, the capacitive elements Cint, and the external capacitive elements Cext. The circulator comprises three ports 26-1, 26-2, and 26-3, each connected to a radio wave device (such as a radio wave source and/or a radio wave detector, not shown) external to the non-reciprocal device 2.

The dotted circuit in the schematic circuit diagram depicts a non-reciprocal element 4 similar to the one of the embodiment of Fig. 1; with capacitive coupling between the electrodes 6 and the non-reciprocal element 4. In Fig. 5, each of the capacitive elements Cint represents a capacitance associated with the capacitive coupling of one of the electrodes 6 to the non-reciprocal element 4.

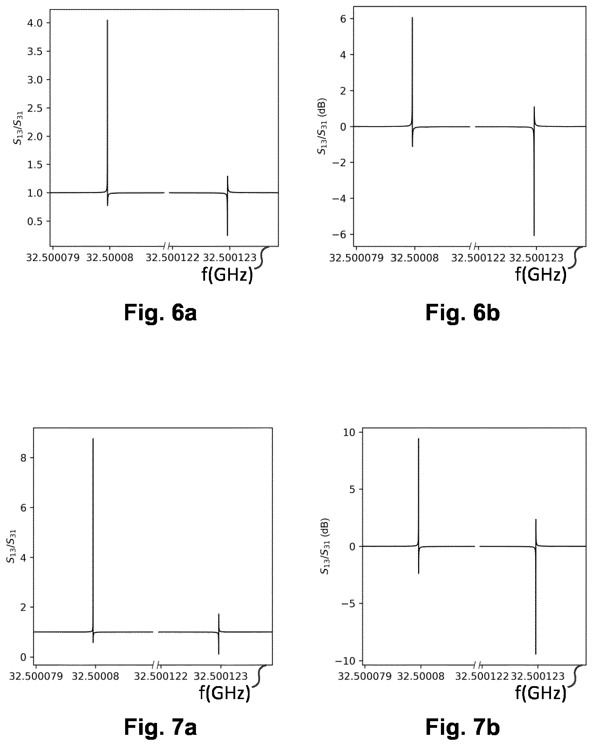

Fig. 6a to Fig. 7b illustrate the ratio of a first transmittance S13 (corresponding to a transmittance along a forward direction) and a second transmittance S31 (corresponding to a transmittance along a reverse direction) between two neighboring electrodes 6 of the non-reciprocal device 2 of Fig. 1, as obtained from simulations of the schematic circuit diagram depicted in Fig. 5. Fig. 6a to Fig. 7b illustrate said ratio as a function of the frequency f in Gigahertz.

In other words, S13 depicts the transmittance from port 26-1 to port 26-3, and S31 depicts the transmittance from port 26-3 to port 26-1.

In yet other words, S13 depicts a first transmittance, at which the radio wave is transmitted via the non-reciprocal element 4 to a neighboring electrode 6 (in the example, coupled to port 26-3) when the radio wave is introduced to the non-reciprocal element 4 via any one of the electrodes 6 (in the example, coupled to port 26-1); and S31 depicts a second transmittance, said second transmittance referring to a transmittance of the radio wave transmitted via the non-reciprocal element 4 to said one of the electrodes 6 (in the example, coupled to port 26-1) when the radio wave is introduced to the non-reciprocal element 4 via the neighboring electrode 6 (in the example, coupled to port 26-3).

The simulations to obtain S13 and S31 from the schematic circuit diagram of Fig. 5 have been performed as described in Boventer et al., PRL 126, 187201 (2021), in Schmool et al., J. Appl. Phys. 86, 5712 (1999), and in Akbashev et al., Appl. Phys. Lett. 99, 122502 (2011).

More specifically, Fig. 6a shows results obtained using the simulation technique described in Boventer et al., PRL 126, 187201 (2021). Fig. 6b shows the same results as Fig. 6a, but in terms of decibel (dB) as opposed to Fig. 6a, which depicts the results on a linear scale.

Fig. 7a shows results obtained using the simulation technique described in Schmool et al., J. Appl. Phys. 86, 5712 (1999), and in Akbashev et al., Appl. Phys. Lett. 99, 122502 (2011). Fig. 7b shows the same results as Fig. 7a, but in terms of decibel as opposed to Fig. 7a, which depicts the results on a linear scale. As compared to the simulations, whose results are shown in Fig. 6a and Fig. 6b, in the simulations that Fig. 7a and Fig. 7b are based on, an additional resistance of 50 Ω inside of the material of the non-reciprocal element 4 has been introduced.

The following parameters have been applied in the simulations to obtain S13 and S31 from the schematic circuit diagram of Fig. 5: σ_{yy} = 0.0085 e²/h as obtained from the simulations of the dispersive properties of the exemplary material hematite explained above in the context of Fig. 2 to Fig. 3b; wherein e is the elementary charge. In other words, R_{xy} = 1/σ_{xy} = 3.04 MΩ. These values are for a frequency of the radio wave of 32.5 GHz, corresponding to an energy of 134 meV. Further, and independent thereof, Cint = 256.5 fF and Cext = 38 fF at each of ports 26-1 and 26-3.

In the simulations, the non-reciprocal element 4 has a cylindrical shape, with a diameter of 100 µm and a thickness of 50 nm. It is composed of α-hematite with its [0001] axis orientated perpendicular to a plane spanned by the electrodes 6.

The results shown in Fig. 6a to Fig. 7b demonstrate that, taking into account all relevant capacitances, resistances, and inductances of the system, the system according to this disclosure indeed implements a non-reciprocal device 2.

Fig. 8 illustrates a method 30 for forming a non-reciprocal device 2, according to an embodiment. The method 30 comprises selecting 32 a material for the non-reciprocal element 4, wherein a crystallographic structure of said material is without inversion symmetry and said material exhibits a Dzyaloshinskii-Moriya interaction. The method 30 further comprises providing 34 the non-reciprocal element 4 comprising said material, and providing 36 electrodes 6.

Fig. 9a to Fig. 9l illustrate a method 30 for forming a non-reciprocal device 2, according to another embodiment.

Fig. 9a illustrates a substrate 12 with a material layer 4' deposited above or on the substrate 12.

The material layer 4' comprises the selected material. In other words, the material layer 4' comprises the material that the non-reciprocal element 4 is to comprise.

In the depicted embodiment, the substrate 12 is composed at its surface 12a of sapphire, and the material layer 4' is a layer of α-hematite. The respective material layer 4' is formed as described in M. Scheufele et al., APL Matter. 11, 091115 (2023), i.e., with its [0001] crystallographic orientation aligned with the surface normal of the substrate 12.

As shown in Fig. 9b, a mask layer 14' is then deposited on the substrate 12 with the material layer 4' thereon.

As shown in Fig. 9c, a structuring process 16 is applied to the mask layer 14'. A mask 14 is thus obtained from the mask layer 14'. The mask 14 has a shape corresponding to the non-reciprocal element 4 to be obtained.

Fig. 9d shows the resulting mask 14 above or on the material layer 4' above or on the substrate 12.

As shown in Fig. 9e, etching 18 is applied to the material layer 4' while the mask 14 is arranged above it.

According to some embodiments, the etching 18 uses an anisotropic etching 18.

According to some embodiments, the etching 18 comprises or is a wet chemical etching.

According to some embodiments, the etching 18 comprises or is a reactive ion etching.

Thus, as shown in Fig. 9f, the material layer 4' is structured into the non-reciprocal element 4. In other words, the etching 18 imprints a shape defined by the mask 14 onto the material layer 4' to structure the material layer 4' into the shape of the non-reciprocal element 4.

Then, the mask 14 is removed.

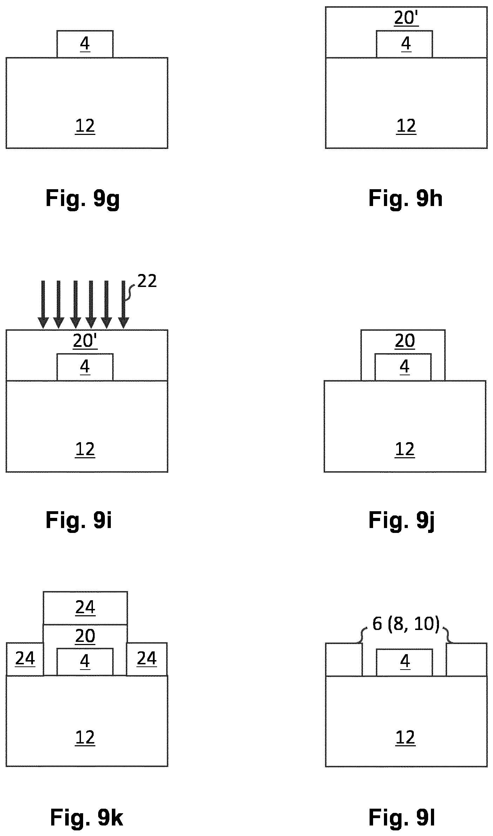

Fig. 9g shows the resulting non-reciprocal element 4 on the substrate 12.

As shown in Fig. 9h, a second mask layer 20' is then deposited on the non-reciprocal element 4 arranged on the substrate 12.

As shown in Fig. 9i, a second structuring process 22 is applied to the second mask layer 20'. A second mask 20 is thus obtained from the second mask layer 20'. The second mask 20 covers the non-reciprocal element 4.

Fig. 9j shows the resulting second mask 20 covering the non-reciprocal element 4.

As shown in Fig. 9k, a conductive material 24 is then deposited over or on the non-reciprocal element 4 covered by the second mask 20. At least part of the conductive material 24 is deposited at a position laterally/horizontally offset from the second mask 20.

The electrodes 6 are at least in part formed from the conductive material 24 deposited at the position laterally/horizontally offset from the second mask 20.

Fig. 9l illustrates an additional, optional process step of removing the second mask 20 and, further optionally, excess conductive material 24 (e.g., above the non-reciprocal element 4).

The examples of the present disclosure disclosed herein only constitute specific examples for illustration purposes. The present invention can be implemented in various ways and with many modifications without altering the underlying basic properties. Therefore, the present invention is only defined by the claims as stated below.

## Claims

1. A non-reciprocal device (2) for a radio wave, the non-reciprocal device (2) comprising:
a non-reciprocal element (4) comprising a material, a crystallographic structure of said material being without inversion symmetry; and
electrodes (6) arranged around the non-reciprocal element (4) and electrically coupled to the non-reciprocal element (4) at different positions along the non-reciprocal element (4);
wherein the non-reciprocal element (4) is adapted to, when the radio wave is introduced to the non-reciprocal element (4) via any one of the electrodes (6), transmit the radio wave via the non-reciprocal element (4) to a neighboring electrode of the electrodes (6) at a first transmittance, wherein said first transmittance is higher than a second transmittance, said second transmittance referring to a transmittance of the radio wave transmitted via the non-reciprocal element (4) to said one of the electrodes (6) when the radio wave is introduced to the non-reciprocal element (4) via the neighboring electrode; and
wherein said material is antiferromagnetic.

2. The non-reciprocal device (2) according to claim 1,
wherein said material is one of the following:
an orthoferrite, in particular an orthoferrite having an empirical formula XFeO3, wherein X is a rare-earth element;
a manganite, in particular a manganite having an empirical formula XMn03, wherein X is a rare-earth element; and
hematite, in particular, wherein the hematite has an empirical formula Fe203 and/or the hematite is α-hematite;
in particular, wherein said material is α-hematite;
and/or
wherein the non-reciprocal element (4) consists of said material or is made from said material; and/or
wherein said material exhibits a Dzyaloshinskii-Moriya interaction.

3. The non-reciprocal device (2) according to any of the preceding claims, wherein the different positions are arranged around the non-reciprocal element (4) in a plane (x, y);
in particular,
wherein said material is α-hematite arranged such that a [0001] crystallographic orientation of the α-hematite is parallel to a surface normal of the plane (x, y); and/or
wherein, along each and any direction in said plane (x, y), an extension of the non-reciprocal element (4) is no more than 1 mm; and/or
wherein the non-reciprocal element (4) has a thickness smaller than 0.5 µm or smaller than 0.2 µm along a direction (z) perpendicular to the plane (x, y).

4. The non-reciprocal device (2) according to claim 1 or 2, wherein the electrodes (6) are arranged around the non-reciprocal element (4) in a plane (x, y);
in particular,
wherein said material is α-hematite arranged such that a [0001] crystallographic orientation of the α-hematite is parallel to a surface normal of the plane (x, y); and/or
wherein, along each and any direction in said plane (x, y), an extension of the non-reciprocal element (4) is no more than 1 mm; and/or
wherein the non-reciprocal element (4) has a thickness smaller than 0.5 µm or smaller than 0.2 µm along a direction (z) perpendicular to the plane (x, y).

5. The non-reciprocal device (2) according to any of the preceding claims,
wherein the different positions are arranged equidistantly and/or symmetrically along the non-reciprocal element (4); and/or
wherein the electrodes (6) and/or the different positions are arranged around the non-reciprocal element (4) in an arrangement exhibiting a mirror symmetry.

6. The non-reciprocal device (2) according to any of the preceding claims, wherein the electrodes (6) and/or the different positions are arranged around the non-reciprocal element (4) in an arrangement exhibiting an n-fold rotational symmetry;
wherein, optionally:
n = 3 or 4, in particular, wherein n = 3; and/or
the non-reciprocal element (4) has a shape exhibiting the n-fold rotational symmetry.

7. The non-reciprocal device (2) according to claim 3, optionally with the features of claim 5, wherein the different positions are arranged around the non-reciprocal element (4) in an arrangement exhibiting an n-fold rotational symmetry about an axis, said axis being perpendicular to the plane (x, y);
wherein, optionally:
n = 3 or 4, in particular, wherein n = 3; and/or
the non-reciprocal element (4) has a shape exhibiting the n-fold rotational symmetry.

8. The non-reciprocal device (2) according to claim 4, optionally with the features of claim 5, wherein the electrodes (6) are arranged around the non-reciprocal element (4) in an arrangement exhibiting an n-fold rotational symmetry about an axis (28), said axis being perpendicular to the plane (x, y);
wherein, optionally:
n = 3 or 4, in particular, wherein n = 3; and/or
the non-reciprocal element (4) has a shape exhibiting the n-fold rotational symmetry.

9. The non-reciprocal device (2) according to any of the preceding claims,
wherein, along each and any direction, an extension of the non-reciprocal element (4) is no more than 1 mm; and/or
wherein the non-reciprocal element (4) has a thickness smaller than 0.5 µm or smaller than 0.2 µm; and/or
wherein the non-reciprocal element (4) is arranged on a substrate (12), wherein, optionally, said material is α-hematite and wherein the substrate (12) comprises or is composed of sapphire, wherein, further optionally, the non-reciprocal element (4) has a thickness of no more than 0.2 µm; and/or
wherein the electrodes (6) are electrically coupled to the non-reciprocal element (4) capacitively or through physical and electrical contacts, preferably capacitively; and/or wherein the radio wave refers to an electromagnetic wave comprising a frequency component in a spectral range from 3 kHz to 3,000 GHz or in a spectral range from 300 MHz to 3,000 GHz or in a spectral range from 300 MHz to 300 GHz or in a spectral range from 1 GHz to 3,000 GHz or in a spectral range from 1 GHz to 300 GHz; and/or
wherein the material is antiferromagnetic at room temperature or at 295 K; and/or wherein the first transmittance is higher than the second transmittance at least by a factor of 2 or at least by a factor of 10.

10. The non-reciprocal device (2) according to any of the preceding claims,
wherein the non-reciprocal device (2) is a circulator (2);
wherein the electrodes (6) are at least three electrodes (6);
wherein the at least three electrodes (6) comprise, for any one of the at least three electrodes (6), a first neighboring electrode, the first neighboring electrode neighboring said one of the at least three electrodes (6) along a first direction, and a second neighboring electrode, the second neighboring electrode neighboring said one of the at least three electrodes (6) along a second direction opposite to the first direction; and
wherein the non-reciprocal element (4) is adapted to, when the radio wave is introduced to the non-reciprocal element (4) via any one of the at least three electrodes (6), transmit the radio wave to the first neighboring electrode at a higher transmittance than to the second neighboring electrode.

11. The circulator (2) according to claim 10,
wherein the first neighboring electrode provides said neighboring electrode; and/or wherein the higher transmittance is higher at least by a factor of 2 or at least by a factor of 10.

12. A method (30) for forming a non-reciprocal device (2) for a radio wave, the method (30) comprising:
selecting (32) a material for a non-reciprocal element (4), wherein a crystallographic structure of said material is without inversion symmetry and said material exhibits a Dyzaloshinskii-Moriya interaction;
providing (34) the non-reciprocal element (4) comprising said material and providing (36) electrodes (6), such that the electrodes (6) are arranged around the non-reciprocal element (4) and electrically coupled to the non-reciprocal element (4) at different positions along the non-reciprocal element (4);
wherein the non-reciprocal element (4) is adapted to, when the radio wave is introduced to the non-reciprocal element (4) via any one of the electrodes (6), transmit the radio wave via the non-reciprocal element (4) to a neighboring electrode of the electrodes (6) at a first transmittance, wherein said first transmittance is higher than a second transmittance, said second transmittance referring to a transmittance of the radio wave transmitted via the non-reciprocal element (4) to said one of the electrodes (6) when the radio wave is introduced to the non-reciprocal element (4) via the neighboring electrode.

13. The method (30) according to claim 12,
wherein providing (34) the non-reciprocal element (4) comprises forming a layer (4') of said material and structuring the layer (4') of said material into a shape of the non-reciprocal element (4), in particular, wherein the formed layer (4') of said material has a thickness smaller than 0.5 µm or smaller than 0.2 µm or smaller than 0.1 µm; wherein, optionally, the layer (4') of said material is formed over or on a substrate (12); wherein, further optionally, said material is α-hematite and wherein the substrate (12) comprises or is composed of sapphire; and/or
wherein said material is antiferromagnetic.

14. Use of the non-reciprocal device (2) according to any of claims 1 to 11 as a non-reciprocal device (2); in particular, wherein said use comprises transmitting the radio wave via the non-reciprocal element (4) to the neighboring electrode of the electrodes (6) at the first transmittance, wherein said first transmittance is higher than the second transmittance.

15. Use of the non-reciprocal device (2) according to any of claims 10 or 11 as a circulator (2); in particular, wherein said use comprises introducing the radio wave to the non-reciprocal element (4) via any one of the at least three electrodes (6), and transmitting the radio wave to the first neighboring electrode at the higher transmittance than to the second neighboring electrode.
